# EUROPEAN PATENT APPLICATION

(11) **EP 0 949 814 A2**
(43) Date of publication of application: **13.10.1999**
(21) Application number: 99106177.1
(22) Date of filing: 08.04.1999
(51) Int. Cl.: H04N 7/16

(54) **Smart card reader with internal wireless receiving module and multimedia system having smart card reader**

(30) Priority: 08.04.1998 KR 9805435
(71) Applicant: Telemann Co., Ltd., Kangnam-ku, Seoul (KR)
(72) Inventor: Ko, Yong-gi, Namdong-ku, Inchcon-si (KR)
(74) Representative: Modiano, Guido, Dr.-Ing.

(57) **Abstract**

Disclosed is a smart card reader having a card slot formed therein and a card reader module for reading data from a smart card inserted in the card slot. The smart card reader includes a wireless receiving module internally mounted in the smart card reader, and for receiving data from wireless peripherals and performing predetermined signal processing on the data; a cable for transmitting the data processed by the wireless receiving module and data read by the card reader module; and a connector formed on a distal end of the cable for electrically connecting with an external electronic device.

## Description

### BACKGROUND OF THE INVENTION

### (a) Field of the Invention

The present invention relates to a smart card reader and a multimedia system having the smart card reader. More particularly, the present invention relates to a smart card reader with an internal wireless receiving module and a multimedia system having the smart card reader, the wireless receiving module enabling wireless communication with various peripherals.

### (b) Description of the Related Art

Televisions equipped with a set-top box and personal computers are increasingly being used for access to the Internet, and viewing of digital satellite broadcasting and digital cable broadcasting. Various peripherals such as a keyboard, mouse, remote controller, etc. must be used for such purposes. In order to provide the user with more convenience, these peripherals can be equipped with wireless capabilities. In the case where a wireless peripheral is used, a wireless receiving device must be provided in the set-top box or PC.

Many digital broadcasting companies and information service providers use a smart card system in which access to particular services and data is made available to only appropriate users. Advantages of such a system include secure access control, ability to easily evolve and expand services, and easy management of customers. The user must have a smart card reader to participate in such a system.

However, in the case where the user utilizes wireless peripherals and at the same time requires access to services and data provided only to holders of smart cards, both the wireless reception device and smart card reader must be purchased and installed in the PC or television set. As a result, the area around the PC or television becomes cluttered. Additional drawbacks include the use of much space by the two devices, and the complicated process of installing these two separate devices.

### SUMMARY OF THE INVENTION

The present invention has been made in an effort to solve the above problems.

It is an object of the present invention to provide a smart card reader with an internal wireless receiving module and a multimedia system having the smart card reader, the wireless receiving module enabling wireless communication with various peripherals.

To achieve the above object, the present invention provides a smart card reader having a card slot formed therein and a card reader module for reading data from a smart card inserted in the card slot. The smart card reader includes a wireless receiving module internally mounted in the smart card reader, and for receiving data from wireless peripherals and performing predetermined signal processing on the data; a cable for transmitting the data processed by the wireless receiving module and data read by the card reader module; and a connector formed on a distal end of the cable for electrically connecting with an external electronic device.

According to a feature of the present invention, the connector is an integrated connector which integrates the data processed by the wireless receiving module and the data read by the card reader module, and transmits the data to an external electronic device.

According to another feature of the present invention, either Velcro is used to attach the smart card reader to an external electronic device, or hooks are provided on a bottom of the smart card reader and corresponding catch grooves are provided on an external electronic device. In the latter case, the hooks are fixedly joined to the catch grooves such that the smart card reader is securely mounted on the external electronic device.

In another embodiment, there is provided a multimedia system including a smart card reader and a multimedia board to which data read by the smart card reader is transmitted, the smart card reader including a card reader module for reading data from a smart card inserted in a card slot; a wireless receiving module internally mounted in the smart card reader, and for receiving data from wireless peripherals and performing predetermined signal processing on the data; a cable for transmitting the data processed by the wireless receiving module and data read by the card reader module; and a connector formed on a distal end of the cable for electrically connecting with an external electronic device.

According to a feature of the present invention, the multimedia board includes a demultiplexer for receiving a transport stream and extracting video and audio data components from the transport stream, the transport stream being digital broadcasting data including video and audio data compressed using a predetermined compression algorithm; a decoder for decoding the video and audio data extracted by the demultiplexer; a memory which stores the video and audio data decoded by the decoder; an audio D/A converter for converting the digital audio data decoded by the decoder into analog audio signals, and outputting the analog audio signals to external speakers; a video encoder for receiving the digital video data decoded by the decoder, converting the digital video data into analog composite video signals, and outputting the analog composite video signals to an external monitor; a smart card reader interface which acts as an interface between the card reader module and the multimedia board; and a wireless receiver module interface which acts as an interface between the wireless receiving module and the multimedia board.

According to another feature of the present invention, the multimedia board is mounted to a mainboard of a PC and further comprises a PCI interface acting as an interface between the decoder and a PCI bus of the mainboard.

According to yet another feature of the present invention, the multimedia board further includes an input terminal into which the connector of the cable of the smart card reader is inserted such that the data processed by the wireless receiving module and the data read by the card reader module are transmitted to the multimedia board; a first output terminal through which the audio signals output from the audio D/A encoder are externally output; and a second output terminal through which the video signals output from the video encoder are externally output.

According to still yet another feature of the present invention, the connector of the smart card reader includes input pins which are electrically connected to the cable of the smart card reader, and input the data processed by the wireless receiving module and the data read by the card reader module to the multimedia board; output pins for outputting the output signals of the audio D/A converter and the audio encoder to an external electronic device; and connecting cables each having a connecting jack, the connecting cables and the connecting jacks electrically connecting the output pins to the extemal electronic device.

According to still yet another feature of the present invention, the multimedia board further comprises a female connector having a plurality of input signal holes and output signal holes into which the input pins and the output pins of the connector of the smart card reader are respectively inserted.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 is a perspective view of a smart card reader according to a first preferred embodiment of the present invention;
FIG. 2 is a perspective view of the smart card reader shown in FIG. 1 in a state mounted externally to a PC main body;
FIG. 3 is a front perspective view of the smart card reader shown in FIG. 1 in a state mounted externally to the PC main body;
FIG. 4 is a rear perspective view of the PC main body shown in FIG. 2;
FIG. 5 is a block diagram of a multimedia board according to a preferred embodiment of the present invention;
FIG. 6 is a perspective view of a smart card reader and a sectional view of a PC main body according to a second preferred embodiment of the present invention in state where the smart card reader is unattached to the PC main body;
FIG. 7a is a perspective view of a smart card reader according to a third preferred embodiment of the present invention;
FIG. 7b is a rear perspective view of a PC main body according to the third preferred embodiment of the present invention; and
FIG. 8 is a perspective view of a smart card reader according to a fourth preferred embodiment of the present invention.

### DETAILED DESCRIPTION OF THE PREFERRED EMBODIMENTS

Preferred embodiments of the present invention will now be described in detail with reference to the accompanying drawings.

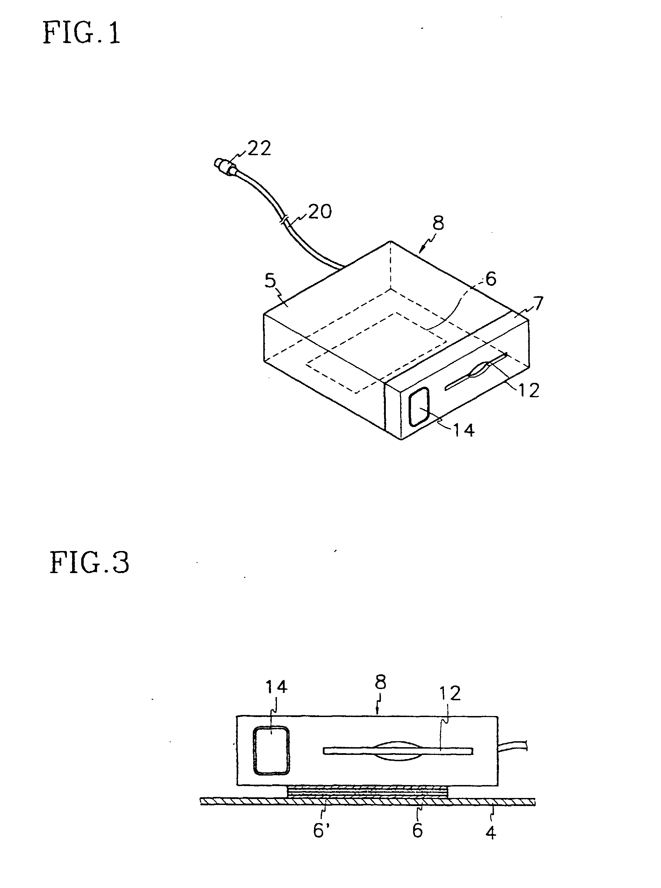

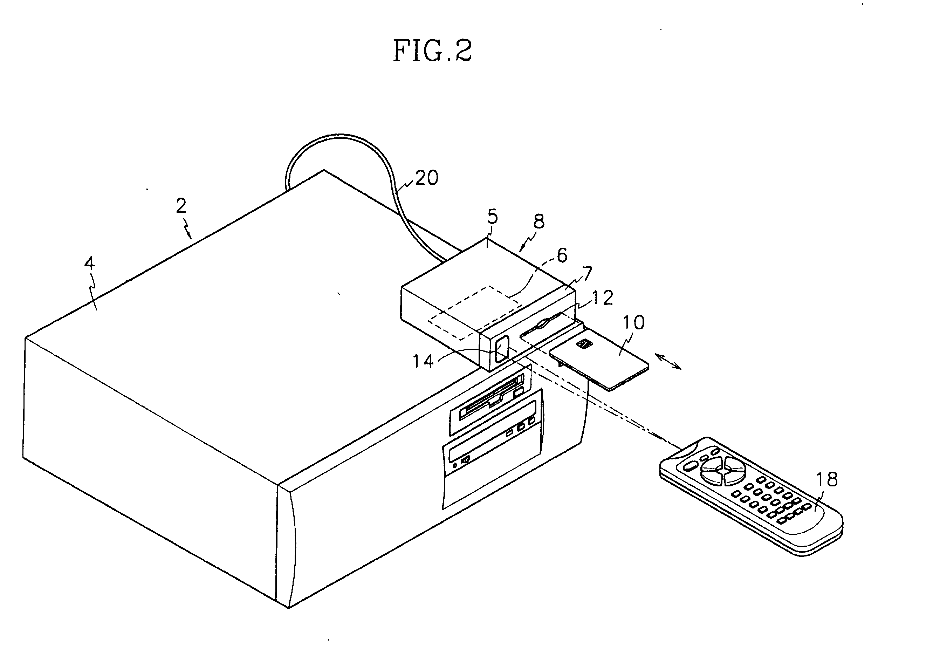

FIG. 1 shows a perspective view of a smart card reader according to a first preferred embodiment of the present invention; and FIG. 2 shows a perspective view of the smart card reader shown in FIG. 1 in a state mounted externally to a PC main body.

As shown in the drawings, a smart card reader 8 includes a housing 5 and a front plate 7, the front plate 7 being fixedly mounted to a front of the housing 5. Formed in the front plate 7 are a card slot 12 into which a smart card 10 is inserted, and a infrared sensor 14 for receiving signals from peripherals such as a remote controller 18. Provided in the smart card reader 8 in proximity to the card slot 12 is a card reader module (not shown). When the smart card 10 is inserted in the card slot 12, the card reader module reads the data from the smart card 10. The infrared sensor 14 is part of a wireless receiving module (not shown) provided in the smart card reader 8, and the signals received from the remote controller 18 by the infrared sensor 14 are processed into a predetermined signal format by the wireless receiving module. Since the operation and basic operating principles of the card reader module and the wireless receiving module are well known in the art, a detailed description thereof will be omitted.

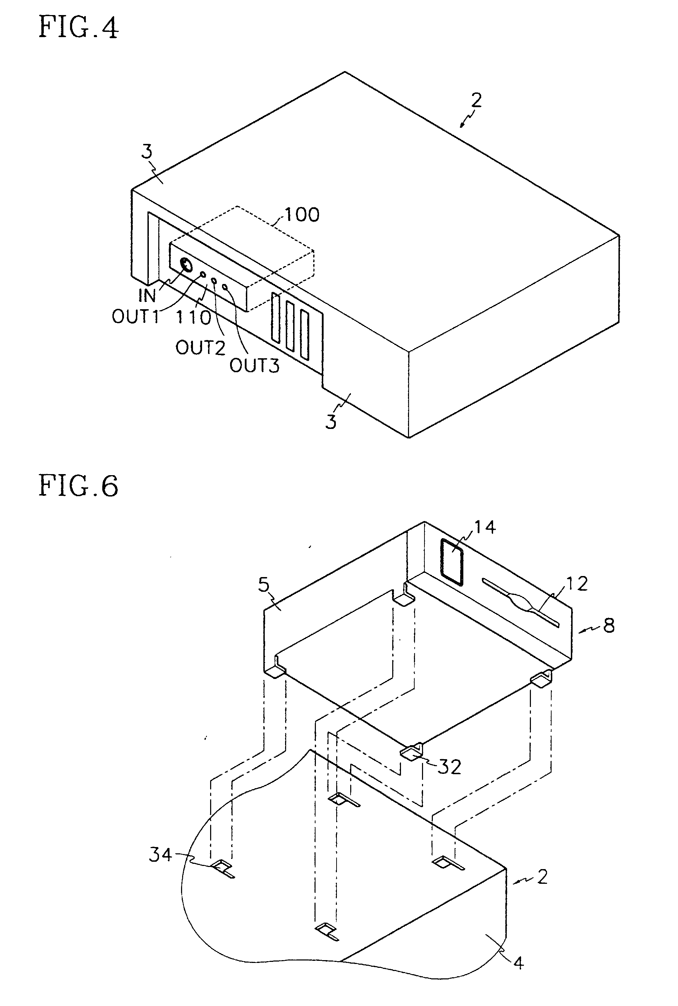

With reference also to FIG. 3, provided face-down on a bottom of the housing 5 of the smart card reader 8 is a first Velcro strip 6. The first Velcro strip 6 is either a hooked or looped portion of a Velcro pair. An opposing second Velcro strip 6' is provided face-up on an upper face 4 of a PC main body 2. If the first Velcro strip 6 is a hooked portion of a Velcro pair, the second Velcro strip 6' is a looped portion of a Velcro pair and vice versa. Also, adhesive material is provided on faces of the first and second Velcro strips 6 and 6' respectively contacting the smart card reader 8 and the PC main body 2 for the secure attachment of the first and second Velcro strips 6 and 6' on the smart card reader 8 and the PC main body 2, respectively. The second Velcro strip 6' is positioned at a desired location on the upper face 4 of the PC main body 2, and by aligning the first Velcro strip 6 to the second Velcro strip 6', the smart card reader 8 is securely fixed to the PC main body 2.

Referring back to FIGs. 1 and 2, a cable 20 connected to the card reader module and the wireless receiving module protrudes from a rear (opposite the front plate 7) of the smart card reader 8. The cable 20 transmits both the data read from the smart card 10 and the signals received from the remote controller 18. Formed on a distal end of the cable 20 is a connector 22. The connector 22 is connected to the PC main body 2. In the smart card reader 8 according to the first preferred embodiment of the present invention, the connector 22 is an integrated connector for transmitting to the computer both the smart card data and remote controller signals flowing through the cable 20.

FIG. 4 shows a rear perspective view of the PC main body 2. Mounted in the PC main body 2 with its terminals 110 flush to a rear side 3 of the PC main body 2 is a multimedia board 100 according to a preferred embodiment of the present invention. The terminals 110 of the multimedia board 100 include an input terminal IN and output terminals OUT1, OUT2 and OUT 3. The connector 22 of the smart card reader 8 is inserted in the input terminal IN of the multimedia board 100 such that the signals received from the remote controller 18 and data read from the smart card 10 are transmitted to the multimedia board 100. The output terminal OUT1 is used to transmit video signals output from the multimedia board 100 to a TV; and the output terminals OUT2 and OUT3 are used to transmit respectively left and right audio signals to left and right speakers.

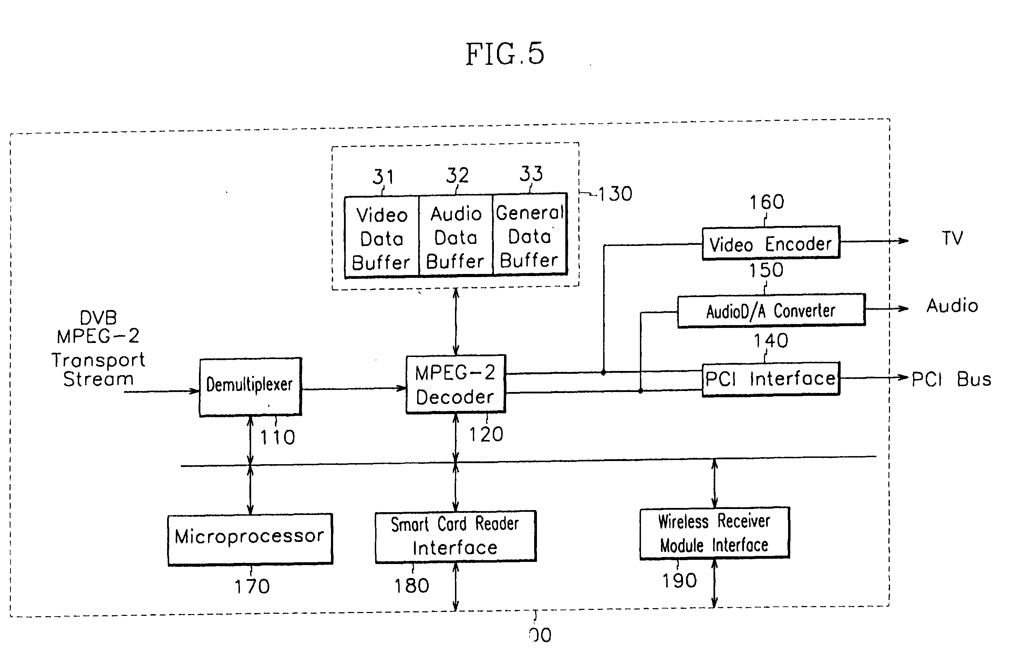

FIG. 5 shows a block diagram of the multimedia board 100 shown in FIG. 4. The multimedia board 100 comprises a demultiplexer 110, a MPEG (moving picture expert group)-2 decoder 120, a memory 130, a PCI interface 140, an audio D/A converter 150, a video encoder 160, a microprocessor 170, a smart card reader interface 180, and a wireless receiver module interface 190.

The demultiplexer 110 receives a DVB/MPEG-2 transport stream and extracts video, audio and text data components from the transport stream. The transport stream is digital broadcasting data which includes video, audio, Internet data compressed using a MPEG-2 algorithm. The MPEG-2 decoder 120 decodes each of the image, sound and text data extracted by the demultiplexer 110. The memory 130 stores the data decoded by the MPEG-2 decoder 120 in a designated address. That is, the memory 130 includes a video data buffer 31 for storing decoded video data, an audio data buffer 32 for storing decoded audio data, and a general data buffer 133 for storing decoded general data. In the present invention, a DRAM (dynamic random access memory) is used for the memory 130.

The PCI interface 140 acts as an interface between the MPEG-2 decoder 120 and a PCI bus of a mainboard (not shown), on which the multimedia board 100 of the present invention is mounted. The audio D/A converter 150 converts the digital audio data decoded by the MPEG-2 decoder 120 into analog audio signals, then outputs the analog audio signals to external speakers. The analog signals converted by the audio D/A converter 150 are comprised of left and right audio signals, and are output to speakers respectively through the output terminals OUT2 and OUT3 shown in FIG. 4. The video encoder 160 receives the digital video data decoded by the MPEG-2 decoder and converts the digital video data into analog composite video signals, after which the video encoder 160 outputs the analog composite video signals to a TV through the output terminal OUT1 of the multimedia board 100.

The smart card reader interface 180 and the wireless receiver module interface 190 act as an interface between the card reader module and the wireless receiving module, respectively, and the remainder of the multimedia board 100. The microprocessor 170 controls all the operations of the multimedia board 100.

The operation of the smart card reader 8 and the multimedia board 100 will be described hereinafter.

First, if the user inserts the smart card 10 in the card slot 12 of the smart card reader 8, the card reader module reads the smart card 10. The read data is then transmitted to the multimedia board 100 through the cable 20 and the connector 22. The microprocessor 170 of the multimedia board 100 receives the read data of the smart card 10 through the input terminal IN, then determines if the user (holder of the smart card 10) is authorized to access video, audio, and/or data signals. In the case where the user is given authorization, the microprocessor 170 controls the multimedia board 100 to operate. Accordingly, the user can access video, sound and general data for use with a TV and speakers or a PC.

On the other hand, if the user inputs commands using the remote controller 18 (e.g., change of channels and volume control), the wireless receiving module installed in the smart card reader 8 receives the signals output from the remote controller 18 via the infrared sensor 14. The signals are processed into a predetermined signal format by the wireless receiving module, then output by the wireless receiving module to the multimedia board 100 through the cable 20 and the connector 22. The microprocessor 110 receives these processed signals from the wireless receiving module, then operates the multimedia board 100 in accordance to the received signals.

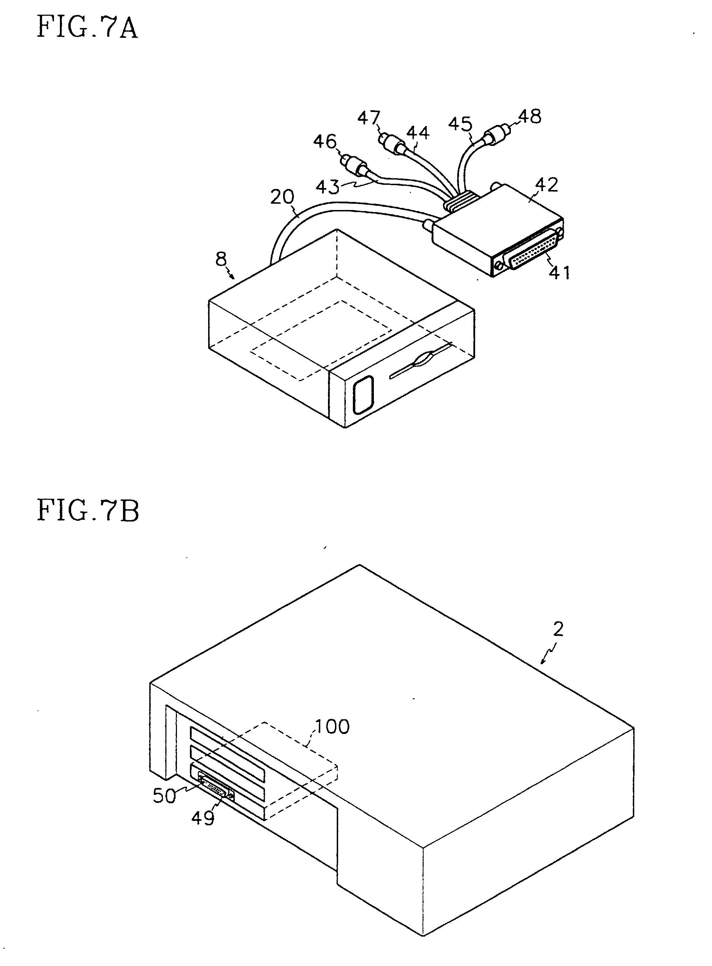

FIG. 6 shows a perspective view of a smart card reader and a sectional view of a PC main body according to a second preferred embodiment of the present invention in state where the smart card reader is unattached to the PC main body. Except for elements which differ in structure from the first preferred embodiment of the present invention, the same reference numerals and names for the elements as used for the first preferred embodiment will be incorporated herein.

As shown in FIG. 6, protruding downward from each corner of the bottom of the housing 5 of the smart card reader 8 are hooks 32. Also, formed at predetermined locations on the upper face 4 of the PC main body 2 are catch grooves 34 corresponding to the hooks 32 of the smart card reader 8. The hooks 32 of the smart card reader 8 and the catch grooves 34 of the PC main body 2 are formed such that the hooks 32 interlock within the catch grooves 34, thereby firmly mounting the smart card reader 8 to the PC main body 2. With this configuration, the smart card reader 8 is more securely mounted to the PC main body 2 than in the first preferred embodiment of the present invention.

In the first preferred embodiment of the present invention, with reference to FIG. 4, the output terminals OUT1, OUT2 and OUT 3 of the multimedia board 100 must be connected to a TV and speakers through separate cables. As a result, the back of the PC main body 2 becomes cluttered with the separate cables needed for the peripherals. This is further aggravated by the fact that more and more peripherals are being used with PCs In addition, the awkward angles and often limited space make connecting the cables to the back of the PC main body 2 difficult.

To remedy these problems, there is provided a smart card reader according to a third preferred embodiment of the present invention. FIG. 7a shows a perspective view of a smart card reader according to a third preferred embodiment of the present invention; and FIG. 7b shows a rear perspective view of a PC main body according to the third preferred embodiment of the present invention. Except for elements which differ in structure from the first preferred embodiment of the present invention, the same reference numerals and names for the elements as used for the first preferred embodiment will be incorporated herein.

Formed on the distal end of the cable 20 is a male integral connector 42. The male integral connector 42 includes a plurality of signal pins 41, and a plurality of connecting cables 43, 44 and 45. A connecting jack 46, 47 and 48 is formed on a distal end of the connecting cables 43, 44 and 45, respectively. The connecting jack 46 is connected to an input terminal of a TV, and the connecting jacks 47 and 48 are connected to input terminals of left and right speakers, respectively.

In the third preferred embodiment of the present invention, the multimedia board 100 includes an female integral connector 49 having a plurality of holes 50 into which the signal pins 41 of the male integral connector 42 are inserted. The signal pins 41 of the male integral connector 42 include both input pins for inputting to the multimedia board 100 data read from the smart card 10 by the card reader module and data processed by the wireless receiving module; and output pins for transmitting to a TV and speakers signals output by the multimedia board 100. The input pins are electrically connected to the cable 20 of the smart card reader 8, while the output pins are electrically connected to the connecting cables 43, 44 and 45 extending from the male integral connector 42.

In the smart card reader 8 and the multimedia board 100 according to the third preferred embodiment of the present invention, after the male integral connector 42 is coupled to the female integral connector 49, the connecting jacks 46, 47 and 48 of the connecting cables 43, 44 and 45 are connected to a TV and speakers. Accordingly, the back of the PC is more organized and connection to peripherals is easy. This also reduces the amount of space used for the various connections.

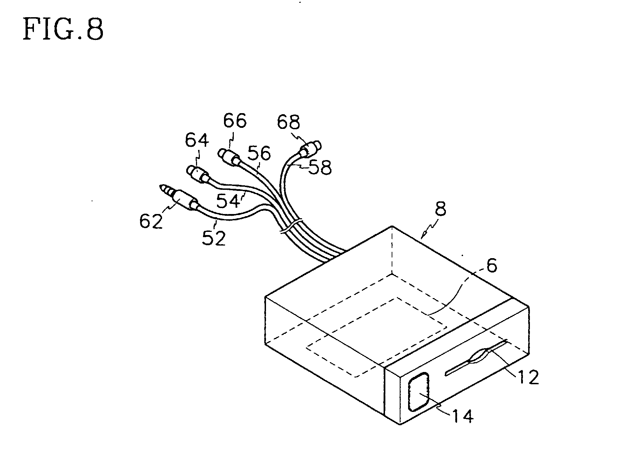

In the above embodiments, although the remote controller 18 was used as an example of a wireless peripheral, it is possible for signals received from other wireless peripherals such as a keyboard or mouse to be processed by the wireless receiving module provided in the smart card reader 8. In this case, it is possible to use the cable and connector 22 as shown in FIG. 1 to transmit the data received from various peripherals (in addition to the data read by the card reader module), or a plurality of cables as shown in FIG. 8.

In more detail, with reference to FIG. 8, cables 52, 54, 56 and 58 for the transmission respectively of signals from a remote controller, keyboard, mouse, and smart card extend from the smart card reader 8. Each of the cables 52, 54, 56 and 58 has a connector 62, 64, 66 and 68, respectively. The connectors 62, 64, 66 and 68 have corresponding input terminals (not shown) provided in the multimedia board 100.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

For example, it will be evident to those in the art that the smart card reader of the present invention can also be applied to a TV equipped with a set-top box or a digital TV. Further, although the above described smart card reader is described as being connected to a multimedia board provided in the PC and connected to a mainboard of the same, it is possible to directly connect the smart card reader to the mainboard of a PC if the mainboard supports the functions of the multimedia board described above.

Where technical features mentioned in any claim are followed by reference signs, those reference signs *have* been included for the sole purpose of increasing the intelligibility of the claims and accordingly, such reference signs do not have any limiting effect on the scope of each element identified by way of example by such reference signs.

## Claims

1. A smart card reader having a card slot formed therein and a card reader module for reading data from a smart card inserted in the card slot, the smart card reader comprising:
a wireless receiving module internally mounted in the smart card reader, and for receiving data from wireless peripherals and performing predetermined signal processing on the data;
a cable for transmitting the data processed by the wireless receiving module and data read by the card reader module; and
a connector formed on a distal end of the cable for electrically connecting with an extemal electronic device.

2. The smart card reader of claim 1 wherein the connector is an integrated connector which integrates the data processed by the wireless receiving module and the data read by the card reader module, and transmits the data to an external electronic device.

3. The smart card reader of claim 1 wherein Velcro is used to attach the smart card reader to an external electronic device.

4. The smart card reader of claim 1 wherein hooks are provided on a bottom of the smart card reader and corresponding catch grooves are provided on an external electronic device, the hooks being fixedly joined to the catch grooves such that the smart card reader is securely mounted on the external electronic device.

5. A multimedia system including a smart card reader and a multimedia board to which data read by the smart card reader is transmitted, wherein the smart card reader comprises:
a card reader module for reading data from a smart card inserted in a card slot;
a wireless receiving module internally mounted in the smart card reader, and for receiving data from wireless peripherals and performing predetermined signal processing on the data;
a cable for transmitting the data processed by the wireless receiving module and data read by the card reader module; and
a connector formed on a distal end of the cable for electrically connecting with an extemal electronic device.

6. The multimedia system of claim 5 wherein the multimedia board comprises:
a demultiplexer for receiving a transport stream and extracting video and audio data components from the transport stream, the transport stream being digital broadcasting data including video and audio data compressed using a predetermined compression algorithm;
a decoder for decoding the video and audio data extracted by the demultiplexer;
a memory which stores the video and audio data decoded by the decoder;
an audio D/A converter for converting the digital audio data decoded by the decoder into analog audio signals, and outputting the analog audio signals to external speakers;
a video encoder for receiving the digital video data decoded by the decoder, converting the digital video data into analog composite video signals, and outputting the analog composite video signals to an external monitor;
a smart card reader interface which acts as an interface between the card reader module and the multimedia board; and
a wireless receiver module interface which acts as an interface between the wireless receiving module and the multimedia board.

7. The multimedia system of claim 6 wherein the multimedia board is mounted to a mainboard of a PC and further comprises a PCI interface acting as an interface between the decoder and a PCI bus of the mainboard.

8. The multimedia system of claim 6 wherein the multimedia board further comprises:
an input terminal into which the connector of the cable of the smart card reader is inserted such that the data processed by the wireless receiving module and the data read by the card reader module are transmitted to the multimedia board;
a first output terminal through which the audio signals output from the audio D/A encoder are externally output; and
a second output terminal through which the video signals output from the video encoder are externally output.

9. The multimedia system of claim 6 wherein the connector of the smart card reader comprises:
input pins which are electrically connected to the cable of the smart card reader, and input the data processed by the wireless receiving module and the data read by the card reader module to the multimedia board;
output pins for outputting the output signals of the audio D/A converter and the audio encoder to an external electronic device; and
connecting cables each having a connecting jack, the connecting cables and the connecting jacks electrically connecting the output pins to the external electronic device.

10. The multimedia system of claim 9 wherein the multimedia board further comprises a female connector having a plurality of input signal holes and output signal holes into which the input pins and the output pins of the connector of the smart card reader are respectively inserted.
